# EUROPÄISCHE PATENTANMELDUNG

(11) **EP 4 235 619 A1**
(43) Veröffentlichungstag der Anmeldung: **30.08.2023**
(21) Anmeldenummer: 22158717.3
(22) Anmeldetag: 25.02.2022
(51) Int. Cl.: G08G 1/054, G01P 3/68

(54) **VERFAHREN UND SYSTEM ZUR MESSUNG DER GESCHWINDIGKEIT VON FAHRZEUGEN IM STRASSENVERKEHR**

(71) Anmelder: Roadia GmbH, 13465 Berlin (DE)
(72) Erfinder: Fischer, Tobias, 13465 Berlin (DE); Filipenko, Mykhaylo, 13465 Berlin (DE); Hantschmann, Markus, 13465 Berlin (DE)
(74) Vertreter: dompatent von Kreisler Selting Werner - Partnerschaft von Patent- und Rechtsanwälten mbB

(57) **Zusammenfassung**

Das Verfahren (10) zur Messung der Geschwindigkeit von Fahrzeugen (44) im Straßenverkehr, unter Verwendung eines Messsystems weist insbesondere die nachfolgenden Schritte auf.
- Erstellung (11) einer ersten, zweiten, dritten und einer vierten Bildaufnahme des Fahrzeuges (44);
- Erkennung (13) von Merkmalen (45) des Fahrzeuges (44) in den einzelnen Bildaufnahmen unter Verwendung der Recheneinheit (26) der Messvorrichtung (20);
- Bestimmung (14) der räumlichen Position mindestens eines Merkmals (45) unter Verwendung eines Triangulationsverfahrens zu dem ersten Zeitpunkt und zu dem zweiten Zeitpunkt;
- Bestimmung (15) der Geschwindigkeit des Fahrzeuges (44);
- Vergleich (16) der zuvor bestimmten Geschwindigkeit des Fahrzeuges (44) mit einer vorgegebenen zulässigen Höchstgeschwindigkeit; und
- Verwerfen (17a) sämtlicher Bildaufnahmen, die für die Berechnung der Fahrzeuggeschwindigkeit verwendet wurden, sofern die ermittelte Fahrzeuggeschwindigkeit geringer ist als die vorgegebene zulässige Höchstgeschwindigkeit.

## Beschreibung

Die vorliegende Erfindung betrifft ein Verfahren zur Messung der Geschwindigkeit von Fahrzeugen im Straßenverkehr sowie ein entsprechendes System für die Geschwindigkeitsmessung.

Aus dem Stand der Technik sind unterschiedliche Ansätze für die Bestimmung von Fahrzeuggeschwindigkeiten bekannt. Diese werden insbesondere dazu eingesetzt, die Verkehrssicherheit zu erhöhen und langfristig die Anzahl der Verkehrsunfälle zu reduzieren.

Eine effiziente, präzise und kostengünstige Messung der Geschwindigkeit bietet den Vorteil, dass diese in sämtlichen Verkehrsabschnitten eingesetzt werden kann, in denen häufig Verkehrsunfälle beobachtet werden. Der Einsatz flächendeckender Verfahren für die Geschwindigkeitsmessung führt unmittelbar dazu, dass das Bewusstsein der Verkehrsteilnehmer hinsichtlich der Einhaltung der zulässigen Höchstgeschwindigkeiten geschärft wird und dass die zuständigen Behörden Verstöße gegen die Überschreitung der Höchstgeschwindigkeit leichter ahnden können.

Bislang werden aktive und passive Messverfahren zur Bestimmung der Fahrzeuggeschwindigkeit eingesetzt.

Bei den aktiven Verfahren sendet die Messvorrichtung elektromagnetische Strahlung aus, die an einem Fahrzeug reflektiert und anschließend von der Messvorrichtung erfasst wird. Durch die Auswertung der reflektierten Strahlung kann auf die Geschwindigkeit des Fahrzeuges geschlossen werden. Dabei kann beispielsweise die Signallaufzeit der von der Messvorrichtung emittierten und am Fahrzeug reflektierten Strahlung ausgewertet werden. Alternativ hierzu können Triangulationsverfahren eingesetzt werden, um die Position eines Fahrzeuges zu zwei unterschiedlichen Zeitpunkten zu berechnen und aus der Differenz der berechneten Positionen sowie der zeitlichen Differenz zwischen den einzelnen Messungen die Fahrzeuggeschwindigkeit zu bestimmen.

Ein Nachteil der aktiven Verfahren ist darin zu sehen, dass diese einen relativ hohen Energiebedarf aufweisen, wodurch ein autarker Betrieb entsprechender Messvorrichtungen erschwert wird, da die Bereitstellung der benötigten Energie durch Batterien, Akkumulatoren und/oder Solarzellen deutlich anspruchsvoller wird. Zudem sind Messvorrichtungen für die aktive Messung der Geschwindigkeit häufig mit hohen Anschaffungskosten verbunden.

Darüber hinaus sind auch passive Messverfahren zur Geschwindigkeitsmessung bekannt, bei denen die Messvorrichtung keine Strahlung emittiert. Bei einigen passiven Messverfahren wird lediglich die Zeit gemessen, die ein Fahrzeug benötigt, um eine vorgegebene Wegstrecke zurückzulegen. Daher werden derartige Verfahren auch als Weg-Zeit-Verfahren bezeichnet. Dabei können Lichtschranken, Helligkeitssensoren oder Drucksensoren eingesetzt werden, die beim Passieren eines Fahrzeugs ein Signal erzeugen. Ein Nachteil der vorstehend beschriebenen Weg-Zeit-Verfahren ist darin zu sehen, dass diese oft bauliche Maßnahmen erfordern, wodurch die anfänglichen Anschaffungs- und Inbetriebnahmekosten relativ hoch ausfallen können. Zudem muss bei den Weg-Zeit-Verfahren eine separate Kamera für die Aufnahme der Fahrzeugdaten und/oder personenspezifischer Daten eingesetzt werden.

Alternativ zu den Weg-Zeit-Verfahren gibt es prinzipiell noch die Möglichkeit, die Geschwindigkeit eines Fahrzeuges rein kamerabasiert zu berechnen. Dabei können zwei Bildsensoren eingesetzt werden, die ein Fahrzeug aus unterschiedlichen Perspektiven zu einem ersten Zeitpunkt erfassen. Durch den Einsatz spezifischer Merkmalserkennungsalgorithmen ist es möglich, ein oder mehrere markante Merkmale eines Fahrzeugs (beispielsweise einen Eckpunkt eines Kfz-Kennzeichens oder einer Windschutzscheibe) zu detektieren und die räumliche Position dieses Merkmals zu bestimmen. Durch eine erneute Erfassung des Fahrzeuges durch die beiden Bildsensoren zu einem zweiten Zeitpunkt kann dasselbe Merkmal des Fahrzeugs in den neu aufgenommenen Bildaufnahmen erkannt und die räumliche Position dieses Merkmals zu dem zweiten Zeitpunkt ermittelt werden. Wenn die Position eines Merkmals zum ersten Zeitpunkt und zum zweiten Zeitpunkt und zudem auch der zeitliche Abstand zwischen den einzelnen Aufnahmen bekannt ist, so kann die Geschwindigkeit für ein Merkmal bzw. für das Fahrzeug berechnet werden.

Nachteilig an den vorstehend beschriebenen kamerabasierten Messverfahren ist jedoch, dass permanent Bildaufnahmen erstellt und abgespeichert werden müssen. Dies führt in der Praxis dazu, dass sehr große Speichermengen erforderlich sind, um derartige Verfahren zu implementieren. Ein weiterer Nachteil der kamerabasierten Messverfahren ist darin zu sehen, dass eine permanente Aufnahme personenbezogener Daten erforderlich ist, um eine bestimmte Verkehrsstrecke zu überwachen. Die permanente Speicherung personenbezogener Daten ohne eine etwaige Veranlassung ist jedoch in einigen Regionen der Welt (insbesondere innerhalb der Europäischen Union) rechtlich nicht zulässig. Daher ist der Einsatz der vorstehend beschriebenen kamerabasierten Verfahren insbesondere innerhalb der Europäischen Union als kritisch anzusehen.

Aufgrund der obigen Nachteile ist es Aufgabe der vorliegenden Erfindung, ein Verfahren zur Messung der Geschwindigkeit von Fahrzeugen im Straßenverkehr bereitzustellen, bei dem insbesondere ein effizientes Datenmanagement erfolgt, wodurch die technischen Anforderungen hinsichtlich der Speichereinheit der Messvorrichtung gering ausfallen.

Zur Lösung der vorstehend genannten Aufgabe wird mit der vorliegenden Erfindung ein Verfahren zur Messung der Geschwindigkeit von Fahrzeugen im Straßenverkehr unter Verwendung eines Messsystems vorgeschlagen, bei dem das Messsystem Folgendes aufweist:
- eine Messvorrichtung mit einem ersten Bildsensor, einem zweiten Bildsensor, einer Speichereinheit, einer Recheneinheit und einer Kommunikationseinheit; sowie
- eine Servereinheit mit einer Speichereinheit, einer Recheneinheit und einer Kommunikationseinheit;
wobei das Verfahren die nachfolgenden Verfahrensschritte umfasst:
- Erstellung einer ersten Bildaufnahme des Fahrzeuges zu einem ersten Zeitpunkt unter Verwendung des ersten Bildsensors und Erstellung einer zweiten Bildaufnahme des Fahrzeuges zu dem ersten Zeitpunkt unter Verwendung des zweiten Bildsensors;
- Erstellung einer dritten Bildaufnahme des Fahrzeuges zu einem zweiten Zeitpunkt unter Verwendung des ersten Bildsensors und Erstellung einer vierten Bildaufnahme des Fahrzeuges zu dem zweiten Zeitpunkt unter Verwendung des zweiten Bildsensors;
- Erkennung von Merkmalen des Fahrzeuges in den einzelnen Bildaufnahmen unter Verwendung der Recheneinheit der Messvorrichtung;
- Bestimmung der räumlichen Position mindestens eines Merkmals unter Verwendung eines Triangulationsverfahrens zu dem ersten Zeitpunkt und zu dem zweiten Zeitpunkt;
- Bestimmung der Geschwindigkeit des Fahrzeuges basierend auf der Geschwindigkeit des mindestens einen Merkmals, wobei die Geschwindigkeit des mindestens einen Merkmals basierend auf der räumlichen Position des mindestens einen Merkmals zu dem ersten Zeitpunkt und zu dem zweiten Zeitpunkt sowie der Differenz aus dem ersten Zeitpunkt und dem zweiten Zeitpunkt berechnet wird;
- Vergleich der zuvor bestimmten Geschwindigkeit des Fahrzeuges mit einer vorgegebenen zulässigen Höchstgeschwindigkeit; und
- Verwerfen sämtlicher Bildaufnahmen, die für die Berechnung der Fahrzeuggeschwindigkeit verwendet wurden, sofern die ermittelte Fahrzeuggeschwindigkeit geringer ist als die vorgegebene zulässige Höchstgeschwindigkeit; und
- Speichern mindestens einer Bildaufnahme in der Speichereinheit der Messvorrichtung und Übermitteln mindestens einer Bildaufnahme des Fahrzeuges von der Messvorrichtung an die Servereinheit unter Verwendung der Kommunikationseinheiten, sofern die ermittelte Fahrzeuggeschwindigkeit höher ist als die vorgegebene zulässige Höchstgeschwindigkeit.

Das erfindungsgemäße Verfahren erlaubt es in vorteilhafter Weise, eine selektive Speicherung von Bildaufnahmen in der Speichereinheit der Messvorrichtung sowie eine selektive Übermittlung von Bildaufnahmen an die Servereinheit vorzunehmen, wodurch einerseits die erforderliche Speicherkapazität der Messvorrichtung reduziert wird und andererseits die insgesamt zwischen der Messvorrichtung und der Servereinheit übertragene Datenmenge deutlich verringert wird. Dadurch sinken die Anforderungen an die Speichereinheit sowie an den Kommunikationskanal zwischen der Messvorrichtung und der Servereinheit. Insgesamt können die technischen Anforderungen an dem Messverfahren reduziert werden, da das erfindungsgemäße Verfahren wesentlich effizienter gestaltet ist als diejenigen Verfahren, bei denen eine kontinuierliche Speicherung der Videosequenzen innerhalb der Messvorrichtung erfolgt bzw. bei denen ein kontinuierlicher Videostream an eine Servereinheit übermittelt wird. Folglich können auch die Kosten für die Implementierung des erfindungsgemäßen Verfahrens deutlich reduziert werden. Ein weiterer Vorteil des erfindungsgemäßen Verfahrens liegt darin, dass personenbezogene Daten, insbesondere Bildaufnahmen eines Fahrers und eines Kennzeichens nur noch anlassbezogen und in den Fällen gespeichert und übertragen werden, in denen eine konkrete Gefährdung des Straßenverkehrs durch eine Geschwindigkeitsüberschreitung erkannt wird. Dadurch ist das erfindungsgemäße Verfahren insbesondere auch konform mit der in der Europäischen Union geltenden DSGVO (Datenschutz-Grundverordnung). Ferner bietet die kamerabasierte Implementierung der Geschwindigkeitsmessung den Vorteil, dass keine baulichen Maßnahmen erforderlich sind. Zudem bietet das erfindungsgemäße Verfahren gegenüber dem Stand der Technik den weiteren Vorteil, dass die Messergebnisse zu einem späteren Zeitpunkt verifiziert werden können. Hierzu kann eine Bildsequenz an die Servereinheit übermittelt werden, sodass zu jedem beliebigen Zeitpunkt - auch mehrere Monate oder Jahre nachdem die Aufnahmen erstellt wurden - jede Einzelmessung überprüft werden kann. Dies kann insbesondere dann von Vorteil teil, wenn ein Fahrzeughalter eine Geschwindigkeitsüberschreitung bestreitet und die Genauigkeit der Messvorrichtung infrage stellt. Das erfindungsgemäße Verfahren erhöht zugleich die Transparenz der Geschwindigkeitsmessung sowie die Akzeptanz in der Bevölkerung.

Bei dem ersten Bildsensor und dem zweiten Bildsensor kann es sich insbesondere um einen CCD-Sensor oder einen CMOS-Sensor handeln. Die Speichereinheiten der Messvorrichtung sowie der Servereinheit können insbesondere als nichtflüchtiger Datenspeicher ausgebildet sein, wobei insbesondere eine magnetische Festplatte (auch als Hard Disk Drive oder HDD bezeichnet) oder ein Festkörperspeicher (auch als Solid State Drive oder SDD) zum Einsatz kommen kann. Die Recheneinheiten können beispielsweise als eine CPU (Central Processing Unit) oder als eine GPU (Graphics Processing Unit) implementiert sein. Die Kommunikationseinheiten können kabelgebundene oder drahtlose Kommunikationsmodule aufweisen. Insbesondere können die Kommunikationseinheiten ein GSM-, ein UMTS-, ein LTE- oder ein 5G-Kommunikationsmodul für die drahtlose Kommunikation aufweisen.

Der erste Bildsensor und der zweite Bildsensor können in einem gemeinsamen Gehäuse angeordnet sein und zueinander geneigt ausgerichtet sein. Durch die Erstellung einer ersten Bildaufnahme und einer zweiten Bildaufnahme zu einem ersten Zeitpunkt und aus unterschiedlichen Perspektiven sowie die anschließende Erkennung von Merkmalen innerhalb der Bildaufnahmen kann unter Verwendung eines Triangulationsverfahrens die Position eines erkannten Merkmals ermittelt werden. Hierzu kann auf eines von vielen, bereits aus dem Stand der Technik bekannten Verfahren zurückgegriffen werden. Zu einem zweiten Zeitpunkt wird der Vorgang wiederholt und es werden eine dritte Bildaufnahme und eine vierte Bildaufnahme erzeugt, wobei anschließend die Merkmale innerhalb der erstellten Bildaufnahmen erkannt werden. Dadurch kann die Position eines Merkmals zu einem zweiten Zeitpunkt berechnet werden. Da der zeitliche Abstand zwischen den Aufnahmen zum ersten Zeitpunkt und dem zweiten Zeitpunkt bekannt ist, kann aus der zurückgelegten Strecke eines Merkmals sowie dem zeitlichen Abstand zwischen den beiden Messungen die Geschwindigkeit für ein Merkmal berechnet werden. Auch wenn es prinzipiell für die Berechnung der Geschwindigkeit eines Fahrzeuges ausreicht, ein einziges Merkmal eines Fahrzeuges zu erkennen und deren Bewegung zu analysieren, können in bevorzugter Weise mehrere Merkmale erkannt werden, sodass eine mittlere Geschwindigkeit aus den einzelnen für jedes Merkmal berechneten Geschwindigkeiten ermittelt werden kann. Dabei kann es vorgesehen sein, dass Ausreißer (also diejenigen Geschwindigkeitswerte, die eine relativ deutliche Abweichung zu einer mittleren Geschwindigkeit aufweisen) bei der Berechnung der mittleren Geschwindigkeit unberücksichtigt bleiben.

Bei den Merkmalen (im Englischen auch als features oder keypoints bezeichnet) des Fahrzeuges kann es sich insbesondere um einen markanten Punkt innerhalb der Bildaufnahme oder eine markante Linie handeln. Diverse Verfahren zur Merkmalserkennung sind bereits aus dem Stand der Technik bekannt. Hierzu gehören insbesondere das SIFT- (Scale Invariant Feature Transform), das SURF- (Speed Up Robust Feature), das BRIEF- (Binary Robust Independent Elementary Feature) oder das ORB- (Oriented FAST and Rotated BRIEF) Verfahren. Zudem kann für die Merkmalserkennung auf den Harris Corner Detector zurückgegriffen werden, um markante Eckpunkte innerhalb einer Bildaufnahme zu erkennen.

Ein Merkmal wird typischerweise durch einen Merkmalsvektor beschrieben. Wird ein Merkmal innerhalb der ersten Bildaufnahme erkannt und ein Merkmal in der zweiten Bildaufnahme, so können die beiden Merkmalsvektoren miteinander verglichen werden, um zu überprüfen, ob diese beiden Merkmale identisch sind. Sofern die beiden in den unterschiedlichen Bildaufnahmen erkannten Merkmale denselben Merkmalsvektor aufweisen, kann davon ausgegangen werden, dass es sich hierbei um dasselbe Merkmal handelt. Alternativ kann der Abstand zwischen zwei Merkmalsvektoren berechnet werden, sodass die Identität zweier Merkmale dann angenommen werden kann, wenn der Abstand zwischen den beiden Merkmalsvektoren geringer ist als ein vorgegebener Schwellwert. Für die Berechnung des Abstandes zwischen zwei Merkmalsvektoren kann beispielsweise der Hamming-Abstand oder der euklidische Abstand zwischen den beiden Merkmalsvektoren berechnet werden.

Wie bereits vorstehend erläutert, ist es für die Bestimmung der Geschwindigkeit eines Fahrzeuges prinzipiell ausreichend, ein einziges Merkmal zu erkennen und anschließend deren räumliche Position zu dem ersten Zeitpunkt und dem zweiten Zeitpunkt zu berechnen. Sofern lediglich ein einziges Merkmal berücksichtigt wird, kann davon ausgegangen werden, dass die Geschwindigkeit des Fahrzeuges gleich der Geschwindigkeit des Merkmals ist. Werden mehrere Merkmale bei der Geschwindigkeitsberechnung berücksichtigt, kann ein Mittelwert aus den einzelnen Geschwindigkeitswerten berechnet werden, wobei einzelne Geschwindigkeitswerte vernachlässigt werden können, wenn diese als unzuverlässig angesehen werden. Geschwindigkeitswerte können dann als unzuverlässig angesehen werden, wenn diese eine relativ große Abweichung gegenüber einem mittleren Geschwindigkeitswert aufweisen oder wenn der Abstand zwischen zwei Merkmalsvektoren zwar geringer als ein vorgegebener Grenzwert ist, aber dennoch relativ groß ist.

Nachdem die Geschwindigkeit eines Fahrzeuges ermittelt wurde, wird diese Geschwindigkeit mit einer vorgegebenen zulässigen Höchstgeschwindigkeit verglichen. Ist in einem Verkehrsabschnitt eine Höchstgeschwindigkeit von 100 km/h erlaubt, kann es vorgesehen sein, dass die gemäß dem erfindungsgemäßen Verfahren zulässige Höchstgeschwindigkeit ebenfalls 100 km/h beträgt oder dass die Höchstgeschwindigkeit unter Berücksichtigung etwaiger Messungenauigkeiten 103 km/h oder 106 hm/h beträgt. Sofern die ermittelte Fahrzeuggeschwindigkeit geringer ist als die gemäß dem erfindungsgemäßen Verfahren vorgegebene zulässige Höchstgeschwindigkeit, werden sämtliche Bildaufnahmen, die für die Berechnung der Fahrzeuggeschwindigkeit verwendet wurden, verworfen. Dadurch wird die Datenmenge, die in der Speichereinheit der Messvorrichtung gespeichert werden muss, signifikant reduziert. In der Praxis zeigt sich, dass die benötigte Speicherkapazität innerhalb der Messvorrichtung durch die selektive Speicherung um mehr als 99% reduziert werden kann. Es werden nämlich nur dann Bildaufnahmen in der Speichereinheit der Messvorrichtung gespeichert und anschließend an die Servereinheit übermittelt, wenn ein konkreter Anlass für die Speicherung und die Datenübermittlung vorliegt. Somit werden auch die Übertragungskapazitäten in effizienter Weise genutzt und die Anforderungen an die Bandbreite des Kommunikationskanals reduziert. Bei dem erfindungsgemäßen Verfahren kann es vorgesehen sein, dass lediglich eine Bildaufnahme und die berechnete Fahrzeuggeschwindigkeit in der Speichereinheit der Messvorrichtung gespeichert und anschließend an die Servereinheit übermittelt werden. Auf diese Weise braucht nur ein Minimum an Daten gespeichert und an die Servereinheit übermittelt werden. Die Servereinheit kann insbesondere einer Behörde oder einer Polizei zugeordnet sein. Insofern können die Mitarbeiter der Behörde bzw. die Polizeibeamten durch die Auswertung der in der Bildaufnahme enthaltenen personenbezogenen Daten (insbesondere Kfz-Kennzeichen und fotografische Abbildung des Fahrers) die notwendigen Maßnahmen einleiten und beispielsweise einen Bußgeldbescheid erlassen.

Gemäß einer Ausführungsform des erfindungsgemäßen Verfahrens kann vorgesehen sein, dass das Verfahren die Erstellung einer fünften Bildaufnahme des Fahrzeuges zu einem dritten Zeitpunkt unter Verwendung eines dritten Bildsensors aufweist und dass das Übermitteln mindestens einer Bildaufnahme des Fahrzeuges von der Messvorrichtung an die Servereinheit das Übermitteln der fünften Bildaufnahme aufweist. Dabei kann der dritte Bildsensor insbesondere eine höhere Bildauflösung aufweisen als der erste Bildsensor und der zweite Bildsensor. Dadurch kann eine besonders hochqualitative Aufnahme der personenbezogenen Daten gewährleistet werden. Auch kann der dritte Bildsensor dazu ausgelegt sein, die fünfte Bildaufnahme zu dem dritten Zeitpunkt zu erstellen, wobei der dritte Zeitpunkt vom ersten Zeitpunkt und zum zweiten Zeitpunkt verschieden ist. Dadurch kann ein vom ersten Zeitpunkt und zum zweiten Zeitpunkt abweichender Zeitpunkt für die optimale Erstellung der fünften Bildaufnahme eingestellt werden. Auch kann der dritte Bildsensor derart konfiguriert sein, dass dessen Bildaufnahmeeinstellungen in Abhängigkeit von der Geschwindigkeit eingestellt werden, die zuvor auf Grundlage der Bildaufnahmen ermittelt wurden, welche durch den ersten Bildsensor und den zweiten Bildsensor generiert wurden. Beispielsweise kann die Belichtungszeit bei der Aufnahme durch den dritten Bildsensor in Abhängigkeit von der ermittelten Fahrzeuggeschwindigkeit konfiguriert sein.

Bevorzugterweise kann die Erstellung der fünften Bildaufnahme des Fahrzeuges zu einem Zeitpunkt erfolgen, bei dem das Fahrzeug einen vordefinierten Abstand zu dem dritten Bildsensor aufweist. Dadurch kann eine besonders gute Erkennbarkeit der personenbezogenen Daten gewährleistet werden. Auch kann vorgesehen sein, dass zur Vermeidung der Aufzeichnung von personenbezogenen Daten Aufzeichnungen nur durch die dritte Kamera erstellt werden können, während die ersten beiden Kameras nur für die Geschwindigkeitsermittlung genutzt werden können. In diesem Fall kann es vorgesehen sein, dass die Daten der ersten beiden Kameras niemals im permanenten, sondern nur im flüchtigen Speicher abgelegt werden können und/oder dass die Auflösung der ersten beiden Kameras soweit reduziert wird, dass zwar die Geschwindigkeit korrekt bestimmt werden kann, jedoch personenbezogene Daten nicht erkennbar sindDer dritte Bildsensor kann dabei zu einem Zeitpunkt auslösen, bei dem der Abstand des Fahrzeuges bzw. der relevanten personenbezogenen Daten zu dem dritten Bildsensor möglichst gering ist. Auf diese Weise können das Kfz-Kennzeichen sowie der Fahrer möglichst detailreich aufgenommen werden.

Ferner kann bei dem erfindungsgemäßen Verfahren vorgesehen sein, dass das Fahrzeug mit einer Beleuchtungsvorrichtung ausgeleuchtet wird. Dadurch kann - insbesondere bei schlechten Lichtverhältnissen - die Qualität der Bildaufnahmen signifikant verbessert werden. Das Ausleuchten des Fahrzeuges kann dabei insbesondere mittels einer Blitzvorrichtung erfolgen.

Gemäß einer bevorzugten Ausführungsform des erfindungsgemäßen Verfahrens können zusätzlich die nachfolgenden Schritte vorgesehen sein:
- Ermitteln der Anzahl der sich bewegenden Merkmale des Fahrzeuges in jedem der Bildaufnahmen; und
- Verwerfen der Bildaufnahmen sowie der erkannten Merkmale, sofern die Anzahl A_MM der sich bewegenden Merkmale geringer ist als ein vorgegebener Grenzwert A_th.

In der Praxis zeigt sich, dass die Geschwindigkeitsermittlung besonders präzise Werte liefert, wenn eine bestimmte Mindestanzahl an sich bewegenden Merkmalen erkannt werden und für die Geschwindigkeitsberechnung zur Verfügung stehen. Diejenigen Merkmale, die sich zwischen dem ersten Zeitpunkt und dem zweiten Zeitpunkt nicht bewegt haben, sind für die Geschwindigkeitsberechnung irrelevant und können nicht zu einer präziseren Geschwindigkeitsberechnung beitragen. Bei denjenigen Bildaufnahmen, bei denen nur sehr wenige sich bewegende Merkmale erkannt werden, kann die Genauigkeit der Geschwindigkeitsberechnung gegebenenfalls den vorgegebenen Anforderungen nicht genügen. Daher können diejenigen Bildaufnahmen, die als nicht besonders aussagekräftig klassifiziert werden, verworfen werden. Der vorgegebener Grenzwert A_th kann beispielsweise gleich 10, 50, 100, 500 oder 1.000 sein.

Bevorzugt kann bei dem erfindungsgemäßen Verfahren vorgesehen sein, dass das Übermitteln mindestens einer Bildaufnahme des Fahrzeuges von der Messvorrichtung an die Servereinheit das Übermitteln einer Bildaufnahme des Fahrzeuges sowie der ermittelten Fahrzeuggeschwindigkeit umfasst, wobei die übermittelten Daten in verschlüsselter Form an die Servereinheit übermittelt werden. Dadurch können sensible Daten (insbesondere die personenbezogenen Daten) in sicherer Weise an die Servereinheit übertragen werden. Dabei können symmetrische oder asymmetrische Verschlüsselungsverfahren zum Einsatz kommen.

Zudem kann vorgesehen sein, dass nicht nur eine Bildaufnahme an die Servereinheit übermittelt wird (sodass der Fahrzeughalter identifiziert werden kann) sondern dass mehrere Bildaufnahmen (beispielsweise die erste, die zweite, die dritte und die vierte Bildaufnahme) an die Servereinheit übermittelt werden, sodass die zuständige Behörde bzw. die Polizei im Bedarfsfall die Geschwindigkeitsberechnung verifizieren kann. Dabei kann vorgesehen sein, dass sämtliche Bildaufnahmen verschlüsselt an die Servereinheit übermittelt werden. Zudem können zusätzliche Daten betreffend die Bildsensoren (beispielsweise Daten betreffend die Anordnung der beiden Bildsensoren) an die Servereinheit übermittelt werden, die für die Berechnung der räumlichen Position der einzelnen Merkmale erforderlich sind.

Ferner kann gemäß dem erfindungsgemäßen Verfahren vorgesehen sein, dass nach der Übermittlung der Bildaufnahme des Fahrzeuges von der Messvorrichtung an die Servereinheit sämtliche Bildaufnahmen aus der Speichereinheit der Messvorrichtung gelöscht werden. Dadurch kann die Speicherkapazität der Messvorrichtung optimal genutzt werden. Zudem wird dadurch vermieden, dass sensible Daten dauerhaft auf der Messvorrichtung gespeichert bleiben. Dadurch wird das Risiko reduziert, dass sensible Daten in die Hände Unbefugter gelangen können, beispielsweise wenn eine Messvorrichtung gestohlen wird.

Ferner wird zur Lösung der vorstehend genannten Aufgabe ein System zur Messung der Geschwindigkeit von Fahrzeugen im Straßenverkehr vorgeschlagen, wobei das System Folgendes umfasst:
- eine Messvorrichtung mit einem ersten Bildsensor, einem zweiten Bildsensor, einer Speichereinheit, einer Recheneinheit und einer Kommunikationseinheit; sowie
- eine Servereinheit mit einer Speichereinheit, einer Recheneinheit und einer Kommunikationseinheit; wobei
- der erste Bildsensor dazu ausgelegt ist, eine erste Bildaufnahme des Fahrzeuges zu einem ersten Zeitpunkt und eine dritte Bildaufnahme des Fahrzeuges zu einem zweiten Zeitpunkt zu erstellen;
- der zweite Bildsensor dazu ausgelegt ist, eine zweite Bildaufnahme des Fahrzeuges zu einem ersten Zeitpunkt und eine vierte Bildaufnahme des Fahrzeuges zu einem zweiten Zeitpunkt zu erstellen;
- die Recheneinheit der Messvorrichtung dazu ausgelegt ist,
- Merkmale des Fahrzeuges in den einzelnen Bildaufnahmen zu erkennen;
- die räumliche Position mindestens eines Merkmals unter Verwendung eines Triangulationsverfahrens zu dem ersten Zeitpunkt und zu dem zweiten Zeitpunkt zu bestimmen;
- die Geschwindigkeit des Fahrzeuges basierend auf der Geschwindigkeit des mindestens einen Merkmals zu bestimmen, und die Geschwindigkeit des mindestens einen Merkmals basierend auf der räumlichen Position des mindestens einen Merkmals zu dem ersten Zeitpunkt und zu dem zweiten Zeitpunkt sowie der Differenz aus dem ersten Zeitpunkt und dem zweiten Zeitpunkt zu bestimmen;
- die zuvor bestimmte Geschwindigkeit des Fahrzeuges mit einer vorgegebenen zulässigen Höchstgeschwindigkeit zu vergleichen; und
- sämtliche Bildaufnahmen zu verwerfen, die für die Berechnung der Fahrzeuggeschwindigkeit verwendet wurden, sofern die ermittelte Fahrzeuggeschwindigkeit geringer ist als die vorgegebene zulässige Höchstgeschwindigkeit; und
- mindestens eine Bildaufnahme des Fahrzeuges in der Speichereinheit der Messvorrichtung zu speichern und unter Verwendung der Kommunikationseinheiten von der Messsvorrichtung an die Servereinheit zu übermitteln, sofern die ermittelte Fahrzeuggeschwindigkeit höher ist als die vorgegebene zulässige Höchstgeschwindigkeit.

Bevorzugt kann bei dem erfindungsgemäßen System vorgesehen sein, dass die Messvorrichtung zusätzlich einen dritten Bildsensor aufweist und dass der dritte Bildsensor dazu ausgelegt ist, eine fünfte Bildaufnahme des Fahrzeuges zu einem dritten Zeitpunkt zu erstellen, wobei die Recheneinheit dazu ausgelegt ist, die fünfte Bildaufnahme von der Messvorrichtung an die Servereinheit zu übermitteln, sofern die ermittelte Fahrzeuggeschwindigkeit höher ist als die vorgegebene zulässige Höchstgeschwindigkeit.

Zudem kann vorgesehen sein, dass der dritte Bildsensor dazu ausgelegt ist, die fünfte Bildaufnahme des Fahrzeuges zu einem Zeitpunkt zu erstellen, zu dem das Fahrzeug einen vordefinierten Abstand zu dem dritten Bildsensor aufweist.

Bevorzugt kann vorgesehen sein, dass die Recheneinheit der Messvorrichtung dazu ausgelegt ist,
- die Anzahl der sich bewegenden Merkmale des Fahrzeuges in jedem der Bildaufnahmen zu ermitteln; und
- die Bildaufnahmen sowie die erkannten Merkmale zu verwerfen, sofern die Anzahl A_MM der sich bewegenden Merkmale in einer Bildaufnahme geringer ist als ein vorgegebener Grenzwert A_th.

Gemäß einer bevorzugten Ausführungsform des erfindungsgemäßen Systems ist die Messvorrichtung dazu eingerichtet, mindestens eine Bildaufnahme des Fahrzeuges sowie die ermittelte Fahrzeuggeschwindigkeit an die Servereinheit zu übermitteln, wobei die Recheneinheit der Messvorrichtung dazu eingerichtet ist, vor der Übermittlung der Daten an die Servereinheit zumindest die mindestens eine Bildaufnahme zu verschlüsseln.

Ferner kann gemäß einer Ausführungsform des erfindungsgemäßen Systems vorgesehen sein, dass die Messvorrichtung dazu eingerichtet ist, nach der Übermittlung der Bildaufnahme des Fahrzeuges an die Servereinheit sämtliche Bildaufnahmen aus der Speichereinheit der Messvorrichtung zu löschen.

Auch kann bevorzugt vorgesehen sein, dass das erfindungsgemäße System eine Beleuchtungsvorrichtung aufweist, die dazu ausgelegt ist, das Fahrzeug zu beleuchten. Dadurch kann die Aufnahmequalität insbesondere bei schlechten Lichtverhältnissen signifikant verbessert werden. Die Beleuchtungsvorrichtung kann insbesondere eine Blitzvorrichtung aufweisen, die beispielsweise als Xenon-Blitzlampe oder LED-Blitzlampe ausgeführt sein kann.

Nachfolgend wird die vorliegende Erfindung anhand der Figuren näher erläutert. Dabei zeigen:
- Fig. 1: ein Ausführungsbeispiel des erfindungsgemäßen Verfahrens,
- Fig. 2: ein Ausführungsbeispiel des erfindungsgemäßen Systems,
- Fig. 3: eine schematische Darstellung der Geschwindigkeitsmessung im Straßenverkehr,
- Fig. 4: eine erste und eine zweite Bildaufnahme, die durch zwei Bildsensoren zu einem ersten Zeitpunkt erzeugt wurden, und
- Fig. 5: eine dritte und eine vierte Bildaufnahme, die durch die beiden Bildsensoren zu einem zweiten Zeitpunkt erstellt wurden.

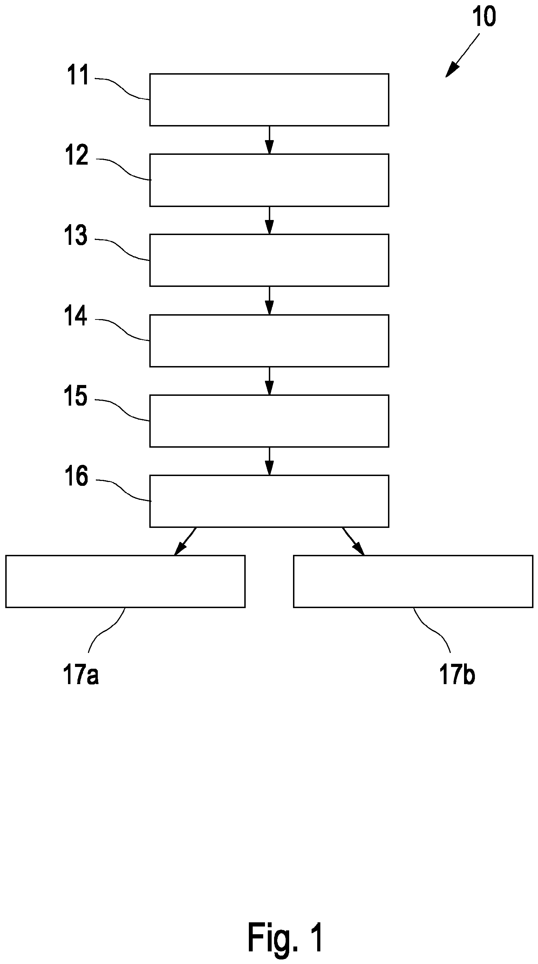

In der Fig. 1 ist ein Ausführungsbeispiel des erfindungsgemäßen Verfahrens 10 dargestellt. Bei dem erfindungsgemäßen Verfahren werden insgesamt sieben Verfahrensschritte 11-17 durchgeführt, wobei die Reihenfolge der einzelnen Schritte für das Erreichen der technischen Wirkung nicht erforderlich ist. In einem ersten Verfahrensschritt 11 werden eine erste Bildaufnahme und eine zweite Bildaufnahme des Fahrzeuges unter Verwendung von zwei Bildsensoren erstellt. Die beiden Bildaufnahmen werden aus unterschiedlichen Perspektiven aufgenommen. In einem zweiten Verfahrensschritt 12 werden unter Verwendung derselben Bildsensoren eine dritte Bildaufnahme sowie eine vierte Bildaufnahme des Fahrzeuges zu einem zweiten Zeitpunkt erstellt. Anschließend werden in einem dritten Verfahrensschritt 13 Merkmale des Fahrzeuges in den einzelnen Bildaufnahmen erkannt. Hierzu kann eines der vorstehend beschriebenen Verfahren, insbesondere ein Harris Corner Detector, verwendet werden. Die nachfolgende Erfindung ist jedoch nicht auf ein spezifisches Merkmalserkennungsverfahren beschränkt und es ist für den Fachmann ersichtlich, dass im Rahmen der vorliegenden Erfindung sämtliche aus dem Stand der Technik bekannten Merkmalserkennungsverfahren eingesetzt werden können. In einem vierten Verfahrensschritt 14 wird die räumliche Position mindestens eines Merkmals unter Verwendung eines Triangulationsverfahrens zu dem ersten Zeitpunkt und zu dem zweiten Zeitpunkt bestimmt. Anschließend wird in einem fünften Verfahrensschritt 15 die Geschwindigkeit des Fahrzeugs basierend auf der Geschwindigkeit mindestens eines Merkmals ermittelt, wobei die Geschwindigkeit mindestens eines Merkmals basierend auf der räumlichen Position des Merkmals zu dem ersten Zeitpunkt und dem zweiten Zeitpunkt sowie der Differenz aus dem ersten Zeitpunkt und dem zweiten Zeitpunkt berechnet wird. Wird lediglich ein Merkmal erkannt, so entspricht die Fahrzeuggeschwindigkeit der Geschwindigkeit des einen Merkmals. Werden mehrere Merkmale erkannt, so kann die Fahrzeuggeschwindigkeit beispielsweise aus dem Mittelwert der einzelnen Geschwindigkeitswerten, die für die jeweiligen Merkmale ermittelt wurden, berechnet werden. Zudem kann vorgesehen sein, dass nicht sämtliche Geschwindigkeitswerte für die Berechnung des Mittelwertes berücksichtigt werden, sondern dass einige Geschwindigkeitswerte, die als unzuverlässig klassifiziert werden (beispielsweise weil sie als Ausreißer erkannt wurden oder weil zuvor der Vergleich der Merkmalsvektoren ergeben hat, dass die Merkmalsvektoren einen relativ großen Abstand zueinander aufweisen) bei der Berechnung der Fahrzeuggeschwindigkeit vernachlässigt werden. In einem sechsten Verfahrensschritt 16 wird die ermittelte Geschwindigkeit des Fahrzeuges mit einer vorgegebenen zulässigen Höchstgeschwindigkeit verglichen. Sofern der Vergleich gemäß dem sechsten Verfahrensschritt 16 darin resultiert, dass die ermittelte Fahrzeuggeschwindigkeit geringer ist als die vorgegebene zulässige Höchstgeschwindigkeit, werden in einem siebten Verfahrensschritt 17a sämtliche Bildaufnahmen, die für die Berechnung der Fahrzeuggeschwindigkeit verwendet wurden, verworfen und nicht in der Speichereinheit der Messvorrichtung hinterlegt. Dadurch werden in denjenigen Situationen keine Bildaufnahmen dauerhaft gespeichert, in denen keine Veranlassung hierfür vorliegt. Dadurch wird die Speicherkapazität der Messvorrichtung optimal genutzt. Resultiert der Vergleich gemäß dem sechsten Verfahrensschritt 16 hingegen darin, dass die vorgegebene Höchstgeschwindigkeit überschritten wurde, so wird in einem alternativen siebten Verfahrensschritt 17b mindestens eine Bildaufnahme des Fahrzeuges in der Speichereinheit der Messvorrichtung gespeichert und anschließend unter Verwendung der Kommunikationseinheiten an die Servereinheit übermittelt. Dadurch kann die zwischen der Messeinrichtung und der Servereinheit ausgetauschte Datenmenge signifikant reduziert werden. Folglich sinken die technischen Anforderungen an den Kommunikationskanal zwischen der Messeinrichtung und der Servereinheit, wodurch die Gesamtkosten für die Implementierung des erfindungsgemäßen Verfahrens reduziert werden können.

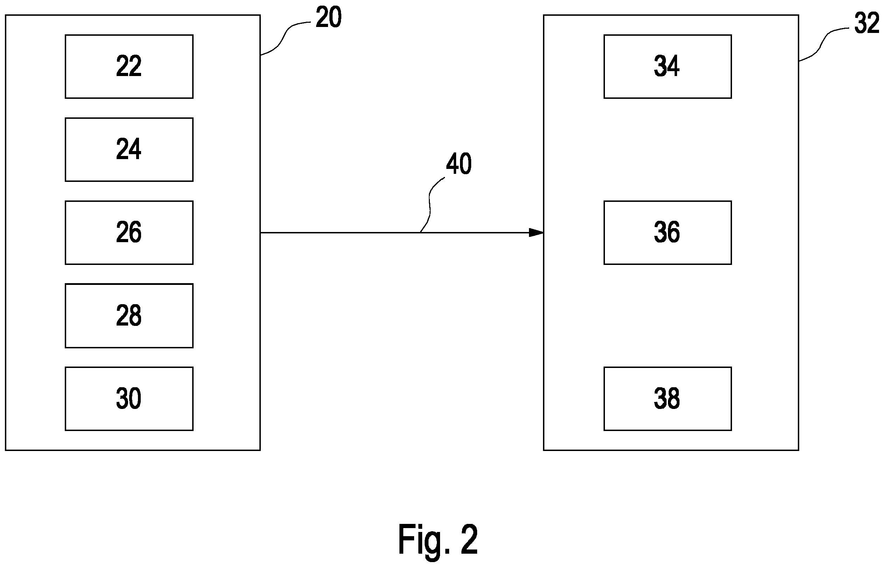

In der Fig. 2 ist ein Ausführungsbeispiel des erfindungsgemäßen Systems umfassend eine Messvorrichtung 20 und eine Auswerteeinheit 32 dargestellt. Die Messvorrichtung 20 weist einen ersten Bildsensor 22, einen zweiten Bildsensor 24, eine Recheneinheit 26, eine Speichereinheit 28 sowie eine Kommunikationseinheit 30 auf. Die Servereinheit 32 weist eine Recheneinheit 34, eine Speichereinheit 36 und eine Kommunikationseinheit 38 auf. Die Servereinheit 32 und die Messeinheit 20 können mittels eines Kommunikationskanals 40 miteinander verbunden sein. Die Messvorrichtung 20 kann beispielsweise an einem Straßenrand zur Messung von Fahrzeuggeschwindigkeiten in einem Straßenabschnitt angeordnet sein. Die Servereinheit 32 kann einer Behörde bzw. der Polizei zugeordnet sein. Dabei kann vorgesehen sein, dass die Servereinheit 32 mit mehreren Messeinheiten 20 kommunizieren kann. Somit dient die Servereinheit 32 als zentrale Einheit, die dazu ausgelegt ist, die relevanten Daten zu den Fahrzeugen zu sammeln, für die eine Überschreitung der zulässigen Höchstgeschwindigkeit festgestellt wurde. Da die Servereinheit 32 in der Praxis mit einer Vielzahl an Messeinheiten kommunizieren kann, die innerhalb einer Stadt oder innerhalb eines Landes verteilt sind, ist es umso wichtiger, eine effiziente Kommunikation zwischen den einzelnen Überwachungseinheiten 20 und der Servereinheit 32 zu gewährleisten, was durch die selektive Datenspeicherung und Datenübermittlung gemäß der vorliegenden Erfindung erreicht wird. Der Kommunikationskanal 40 kann, wie in der Figur 2 abgebildet, ein einseitiger Kommunikationskanal 40 sein. Dabei werden lediglich Daten von der Messeinheit 20 an die Servereinheit 32 übermittelt. Alternativ hierzu kann es auch vorgesehen sein, dass auch die Servereinheit 32 Daten an eine oder mehrere Messeinheiten 20 senden kann und dass der Kommunikationskanal 40 insofern als zweiseitiger Kommunikationskanal ausgebildet ist.

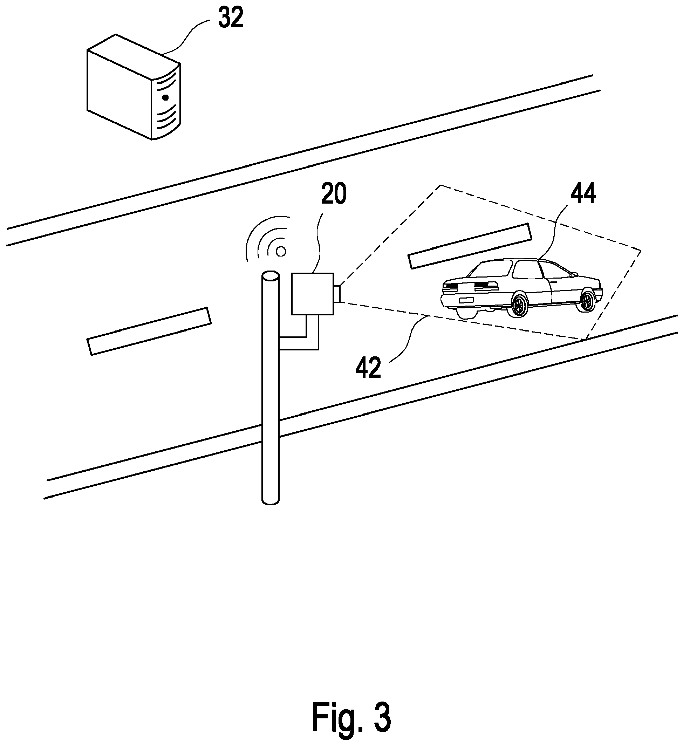

In der Fig. 3 ist das Prinzip der Geschwindigkeitsmessung unter Verwendung des erfindungsgemäßen Systems 20, 32 schematisch dargestellt. Wie in dieser Figur gezeigt, kann das erfindungsgemäße System 20, 32 beispielsweise an einem Straßenrand montiert sein. Das System 20, 32 ist derart ausgerichtet, dass es einen Erfassungsbereich 42 überwachen kann. Sämtliche Fahrzeuge 44, die den Erfassungsbereich 42 passieren, können durch das System 20, 32 überwacht werden, wobei insbesondere die Geschwindigkeit des Fahrzeugs 44 durch das vorstehend beschriebene Verfahren bestimmt werden kann. Sofern das erfindungsgemäße System 20, 32 die Geschwindigkeit des Fahrzeugs 44 erkannt hat, kann es die ermittelte Geschwindigkeit mit der in dem jeweiligen Streckenabschnitt zulässigen Höchstgeschwindigkeit vergleichen. Ist die zulässige Höchstgeschwindigkeit durch das Fahrzeug 44 überschritten, so wird mindestens eine Bildaufnahme des Fahrzeugs 44 abgespeichert und an die Servereinheit 32, die der zuständigen Behörde zugeordnet ist, weitergeleitet. Dabei kann beispielsweise eine einzelne Bildaufnahme des Fahrzeugs 44 an die zuständige Behörde zur Identifikation des Fahrzeughalters weitergeleitet werden, und zwar zusammen mit der ermittelten Geschwindigkeit. Alternativ können auch die aufgenommenen Bildsequenzen abgespeichert und an die Servereinheit 32 weitergeleitet werden, sodass die Korrektheit der Geschwindigkeitsberechnung zu einem späteren Zeitpunkt verifiziert werden kann, sofern die Geschwindigkeitsüberschreitung von dem Fahrzeughalter infrage gestellt werden sollte. In dem in der Fig. 3 dargestellten Ausführungsbeispiel kommuniziert die Messvorrichtung 20 mit der Servereinheit 32 über einen drahtlosen Kommunikationskanal. Alternativ kann es jedoch auch vorgesehen sein, dass die Messvorrichtung 20 und die Servereinheit 32 über einen kabelgebundenen Kommunikationskanal Daten miteinander austauschen.

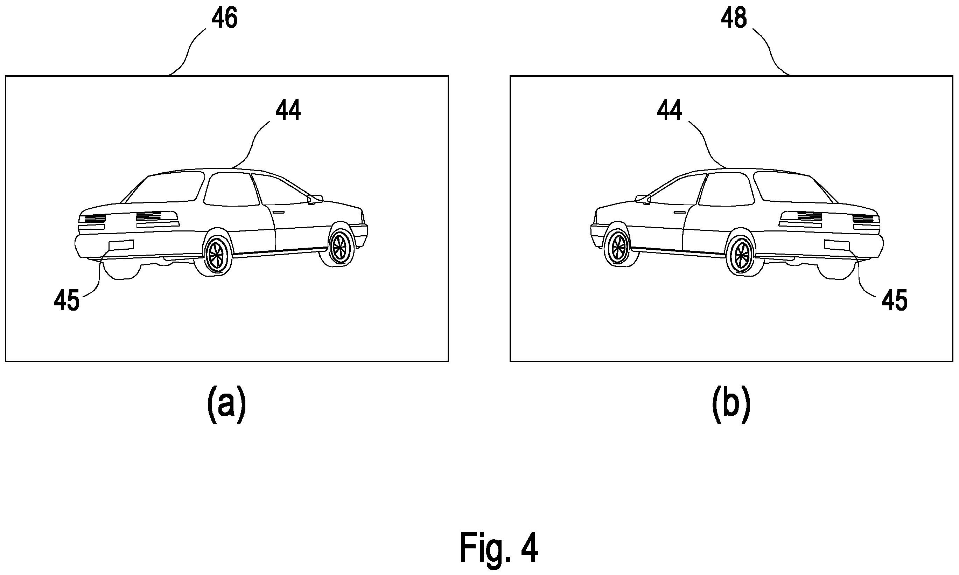

In der Fig. 4 sind eine erste Bildaufnahme 46 und eine zweite Bildaufnahme 48 dargestellt, die jeweils zu einem ersten Zeitpunkt t1 erzeugt wurden. Die erste Bildaufnahme 46 wurde durch einen ersten Bildsensor erstellt, während die zweite Bildaufnahme 48 durch einen zweiten Bildsensor erstellt wurde. Die beiden Bildsensoren nehmen die entsprechenden Bilder aus unterschiedlichen Perspektiven auf. In der ersten Bildaufnahme 46 ist ein Fahrzeug 44 zu erkennen. Innerhalb der ersten Bildaufnahme 46 wurde ein Merkmal 45 erkannt. Bei diesem Merkmal 45 handelt es sich um einen Eckpunkt des Fahrzeugkennzeichens. Für die Merkmalserkennung kann eines der vorstehend beschriebenen Verfahren eingesetzt werden. Beispielsweise kann hierfür ein Harris Corner Detector zum Einsatz kommen. Das Merkmal 45 wurde ebenfalls in der zweiten Bildaufnahme 48 erkannt. Das Merkmal 45 kann beispielsweise durch einen Merkmalsvektor beschrieben werden. Durch Vergleich der Merkmalsvektoren der Merkmale, die in der ersten Bildaufnahme 46 und in der zweiten Bildaufnahme 48 erkannt wurden, kann geprüft werden, ob in den beiden Bildaufnahmen 46, 48 dasselbe Merkmal erkannt wurde. Ist dies der Fall, wird die räumliche Position für das erkannte Merkmal berechnet. Unter Verwendung trigonometrischer Beziehungen kann die Position des Merkmals 45 zum ersten Zeitpunkt bestimmt werden. Auch wenn in der Fig. 4 die Erkennung eines einzelnen Merkmals 45 dargestellt ist, können in der Praxis eine Vielzahl von Merkmalen in einer Bildaufnahme erkannt und für die Geschwindigkeitsberechnung verwendet werden. Beispielsweise können mehrere 100 oder mehrere 1.000 Merkmale in einer Bildaufnahme bzw. auf einem Fahrzeug erkannt werden, sodass mehrere Geschwindigkeitswerte für jedes einzelne Merkmal berechnet werden können. Dadurch kann die Fahrzeuggeschwindigkeit aus dem Mittelwert der einzelnen Geschwindigkeitswerte berechnet werden. Dies führt dazu, dass einzelne Ausreißer das Gesamtergebnis nicht signifikant verfälschen.

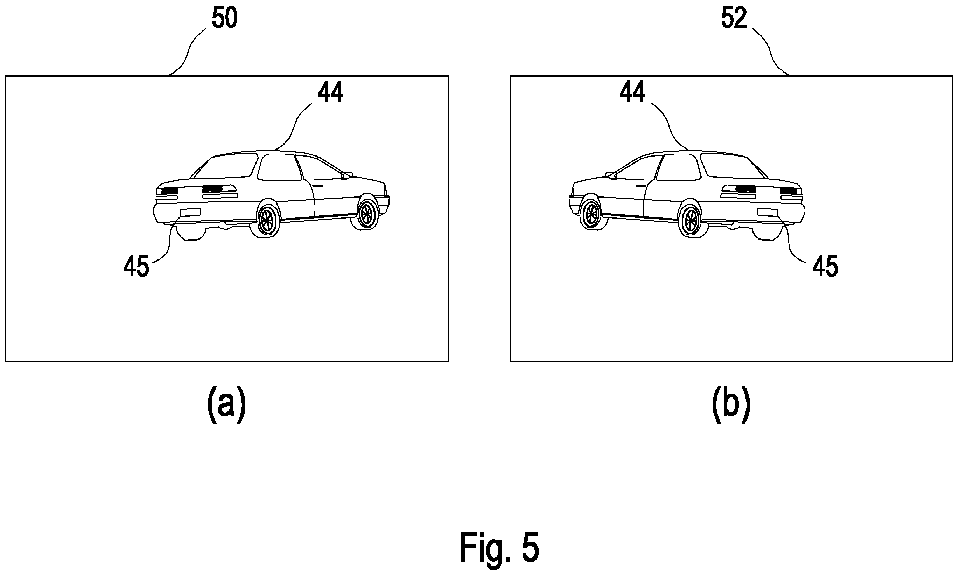

In der Fig. 5 sind eine dritte Bildaufnahme 50 und eine vierte Bildaufnahme 52 dargestellt, die zu einem zweiten Zeitpunkt t2 aufgenommen wurden. Die dritte Bildaufnahme 50 wurde durch den ersten Bildsensor aufgenommen, während die vierte Bildaufnahme 52 durch den zweiten Bildsensor aufgenommen wurde. In den Bildaufnahmen 50, 52 ist dasselbe Fahrzeug 44 abgebildet, das zuvor in der Fig. 4 zu erkennen war. Wie in der Fig. 5 dargestellt, hat das Fahrzeug 44 im Vergleich zu dem ersten Zeitpunkt t1 eine bestimmte Strecke zurückgelegt. Folglich hat sich die Position des Merkmals 45 von der Fig. 4 zur Fig. 5 verändert. Dadurch kann ein Geschwindigkeitsvektor für das Merkmal 45 ermittelt werden.

Aus dem Geschwindigkeitsvektor und der zeitlichen Differenz zwischen den in den Fign. 4 und 5 dargestellten Aufnahmen kann anschließend eine Geschwindigkeit für das Merkmal 45 bestimmt werden. Sofern mehrere Merkmale 45 in den einzelnen Bildaufnahmen erkannt wurden, kann für jedes einzelne Merkmal 45 eine Geschwindigkeit ermittelt werden, sodass die Fahrzeuggeschwindigkeit aus dem Mittelwert der einzelnen Geschwindigkeitswerte berechnet werden kann. Dabei können die Geschwindigkeitsvektoren, die als Ausreißer angesehen werden, bei der Geschwindigkeitsbestimmung vernachlässigt werden. Sobald die Fahrzeuggeschwindigkeit wie vorstehend beschrieben berechnet wurde, wird eine Entscheidung getroffen, ob mindestens eine Bildaufnahme des Fahrzeuges in der Speichereinheit der Messvorrichtung abgespeichert und anschließend an die Servereinheit übermittelt werden soll (da eine Geschwindigkeitsüberschreitung festgestellt werden konnte und somit eine Veranlassung für eine Speicherung der Bildaufnahmen vorliegt) oder ob sämtliche der Bildaufnahmen verworfen werden sollen (da keine Geschwindigkeitsüberschreitung festgestellt werden konnte und somit keine Veranlassung für eine Speicherung der Bildaufnahmen vorliegt). Durch die selektive Speicherung der Bildaufnahmen wird ein besonders effizientes Datenmanagement ermöglicht, sodass nur geringe Anforderungen an die Speicherkapazität der Messvorrichtung gestellt werden, während die zwischen der Messvorrichtung und der Servereinheit übertragene Datenmenge auf ein Minimum begrenzt wird.

### BEZUGSZEICHENLISTE

- 10: erfindungsgemäßes Verfahren
- 11: erster Verfahrensschritt
- 12: zweiter Verfahrensschritt
- 13: dritter Verfahrensschritt
- 14: vierter Verfahrensschritt
- 15: fünfter Verfahrensschritt
- 16: sechster Verfahrensschritt
- 17a: erste Variante des siebten Verfahrensschrittes
- 17b: zweite Variante des siebten Verfahrensschrittes
- 20: Messsvorrichtung
- 22: erster Bildsensor
- 24: zweiter Bildsensor
- 26: Recheneinheit der Messvorrichtung
- 28: Speichereinheit der Messvorrichtung
- 30: Kommunikationseinheit der Messvorrichtung
- 32: Servereinheit
- 34: Recheneinheit der Servereinheit
- 36: Speichereinheit der Servereinheit
- 38: Kommunikationseinheit der Servereinheit
- 40: Kommunikationskanal
- 42: Erfassungsbereich
- 44: Fahrzeug
- 45: Merkmal
- 46: erste Bildaufnahme
- 48: zweite Bildaufnahme
- 50: dritte Bildaufnahme
- 52: vierte Bildaufnahme

## Patentansprüche

1. Verfahren (10) zur Messung der Geschwindigkeit von Fahrzeugen (44) im Straßenverkehr, unter Verwendung eines Messsystems umfassend
- eine Messvorrichtung (20) mit einem ersten Bildsensor (22), einem zweiten Bildsensor (24), einer Speichereinheit (28), einer Recheneinheit (26) und einer Kommunikationseinheit (30); sowie
- eine Servereinheit (32) mit einer Speichereinheit (36), einer Recheneinheit (34) und einer Kommunikationseinheit (38);
wobei das Verfahren (10) die nachfolgenden Verfahrensschritte aufweist:
- Erstellung (11) einer ersten Bildaufnahme (46) des Fahrzeuges (44) zu einem ersten Zeitpunkt unter Verwendung des ersten Bildsensors (22) und Erstellung einer zweiten Bildaufnahme (48) des Fahrzeuges (44) zu dem ersten Zeitpunkt unter Verwendung des zweiten Bildsensors (24);
- Erstellung (12) einer dritten Bildaufnahme (50) des Fahrzeuges (44) zu einem zweiten Zeitpunkt unter Verwendung des ersten Bildsensors (22) und Erstellung einer vierten Bildaufnahme (52) des Fahrzeuges (44) zu dem zweiten Zeitpunkt unter Verwendung des zweiten Bildsensors (24);
- Erkennung (13) von Merkmalen (45) des Fahrzeuges (44) in den einzelnen Bildaufnahmen unter Verwendung der Recheneinheit (26) der Messvorrichtung (20);
- Bestimmung (14) der räumlichen Position mindestens eines Merkmals (45) unter Verwendung eines Triangulationsverfahrens zu dem ersten Zeitpunkt und zu dem zweiten Zeitpunkt;
- Bestimmung (15) der Geschwindigkeit des Fahrzeuges (44) basierend auf der Geschwindigkeit des mindestens einen Merkmals (45), wobei die Geschwindigkeit des mindestens einen Merkmals (45) basierend auf der räumlichen Position des mindestens einen Merkmals (45) zu dem ersten Zeitpunkt und zu dem zweiten Zeitpunkt sowie der Differenz aus dem ersten Zeitpunkt und dem zweiten Zeitpunkt berechnet wird;
- Vergleich (16) der zuvor bestimmten Geschwindigkeit des Fahrzeuges (44) mit einer vorgegebenen zulässigen Höchstgeschwindigkeit; und
- Verwerfen (17a) sämtlicher Bildaufnahmen, die für die Berechnung der Fahrzeuggeschwindigkeit verwendet wurden, sofern die ermittelte Fahrzeuggeschwindigkeit geringer ist als die vorgegebene zulässige Höchstgeschwindigkeit; und
- Speichern (17b) mindestens einer Bildaufnahme (46, 48, 50, 52) des Fahrzeuges (44) in der Speichereinheit (28) der Messvorrichtung (20) und Übermitteln mindestens einer Bildaufnahme (46, 48, 50, 52) des Fahrzeuges (44) von der Messvorrichtung (20) an die Servereinheit (32) unter Verwendung der Kommunikationseinheiten (30, 38), sofern die ermittelte Fahrzeuggeschwindigkeit höher ist als die vorgegebene zulässige Höchstgeschwindigkeit.

2. Verfahren (10) nach Anspruch 1, **dadurch gekennzeichnet, dass** das Verfahren (10) die Erstellung einer fünften Bildaufnahme des Fahrzeuges (44) zu einem dritten Zeitpunkt unter Verwendung eines dritten Bildsensors aufweist und dass das Übermitteln mindestens einer Bildaufnahme (46, 48, 50, 52) des Fahrzeuges (44) von der Messvorrichtung (20) an die Servereinheit (32) das Übermitteln der fünften Bildaufnahme aufweist.

3. Verfahren (10) nach Anspruch 2, **dadurch gekennzeichnet, dass** die Erstellung der fünften Bildaufnahme des Fahrzeuges (44) zu einem Zeitpunkt erfolgt, zu dem das Fahrzeug (44) einen vordefinierten Abstand zu dem dritten Bildsensor aufweist.

4. Verfahren (10) nach einem der Ansprüche 1 bis 3, **dadurch gekennzeichnet, dass** das Verfahren (10) zusätzlich die nachfolgenden Schritte aufweist:
- Ermitteln der Anzahl der sich bewegenden Merkmale (45) des Fahrzeuges (44) in jedem der Bildaufnahmen; und
- Verwerfen der Bildaufnahmen sowie der erkannten Merkmale (45), sofern die Anzahl A_MM der sich bewegenden Merkmale (45) geringer ist als ein vorgegebener Grenzwert A_th.

5. Verfahren (10) nach einem der Ansprüche 1 bis 4, **dadurch gekennzeichnet, dass** das Übermitteln mindestens einer Bildaufnahme (46, 48, 50, 52) des Fahrzeuges (44) von der Messvorrichtung (20) an die Servereinheit (32) das Übermitteln einer Bildaufnahme (46, 48, 50, 52) des Fahrzeuges (44) sowie der ermittelten Fahrzeuggeschwindigkeit umfasst, wobei die übermittelten Daten in verschlüsselter Form an die Servereinheit (32) übermittelt werden.

6. Verfahren (10) nach einem der Ansprüche 1 bis 5, **dadurch gekennzeichnet, dass** nach der Übermittlung der Bildaufnahme des Fahrzeugs (44) von der Messvorrichtung (20) zu der Servereinheit (32) sämtliche Bildaufnahmen aus der Speichereinheit (28) der Messvorrichtung (20) gelöscht werden.

7. System zur Messung der Geschwindigkeit von Fahrzeugen (44) im Straßenverkehr, umfassend
- eine Messvorrichtung (20) mit einem ersten Bildsensor (22) und einem zweiten Bildsensor (24), einer Speichereinheit (28), einer Recheneinheit (26) und einer Kommunikationseinheit (30), sowie
- eine Servereinheit (32) mit einer Speichereinheit (36), einer Recheneinheit (34) und einer Kommunikationseinheit (38), wobei
- der erste Bildsensor (22) dazu ausgelegt ist, eine erste Bildaufnahme (46) des Fahrzeuges (44) zu einem ersten Zeitpunkt und eine dritte Bildaufnahme (50) des Fahrzeuges (44) zu einem zweiten Zeitpunkt zu erstellen;
- der zweite Bildsensor (24) dazu ausgelegt ist, eine zweite Bildaufnahme (48) des Fahrzeuges (44) zu einem ersten Zeitpunkt und eine vierte Bildaufnahme (52) des Fahrzeuges (44) zu einem zweiten Zeitpunkt zu erstellen;
- die Recheneinheit (26) der Messvorrichtung (20) dazu ausgelegt ist,
- Merkmale (45) des Fahrzeuges (44) in den einzelnen Bildaufnahmen (46, 48, 50, 52) zu erkennen;
- die räumliche Position mindestens eines Merkmals (45) unter Verwendung eines Triangulationsverfahrens zu dem ersten Zeitpunkt und zu dem zweiten Zeitpunkt zu bestimmen;
- die Geschwindigkeit des Fahrzeuges (44) basierend auf der Geschwindigkeit des mindestens einen Merkmals (45) zu bestimmen, und die Geschwindigkeit des mindestens einen Merkmals (45) basierend auf der räumlichen Position des mindestens einen Merkmals (45) zu dem ersten Zeitpunkt und zu dem zweiten Zeitpunkt sowie der Differenz aus dem ersten Zeitpunkt und dem zweiten Zeitpunkt zu bestimmen;
- die zuvor bestimmte Geschwindigkeit des Fahrzeuges (44) mit einer vorgegebenen zulässigen Höchstgeschwindigkeit zu vergleichen; und
- sämtliche Bildaufnahmen (46, 48, 50, 52) zu verwerfen, die für die Berechnung der Fahrzeuggeschwindigkeit verwendet wurden, sofern die ermittelte Fahrzeuggeschwindigkeit geringer ist als die vorgegebene zulässige Höchstgeschwindigkeit; und
- mindestens eine Bildaufnahme (46, 48, 50, 52) des Fahrzeuges (44) unter Verwendung der Kommunikationseinheiten (30) von der Messvorrichtung (20) an die Servereinheit (32) zu übermitteln, sofern die ermittelte Fahrzeuggeschwindigkeit höher ist als die vorgegebene zulässige Höchstgeschwindigkeit.

8. System nach Anspruch 7, **dadurch gekennzeichnet, dass** die Messvorrichtung (20) zusätzlich einen dritten Bildsensor aufweist und dass der dritte Bildsensor dazu ausgelegt ist, eine fünfte Bildaufnahme des Fahrzeuges (44) zu einem dritten Zeitpunkt zu erstellen, wobei die Recheneinheit (26) dazu ausgelegt ist, die fünfte Bildaufnahme von der Messvorrichtung (20) an die Servereinheit (32) zu übermitteln, sofern die ermittelte Fahrzeuggeschwindigkeit höher ist als die vorgegebene zulässige Höchstgeschwindigkeit.

9. System nach Anspruch 8, **dadurch gekennzeichnet, dass** der dritte Bildsensor dazu ausgelegt ist, die fünfte Bildaufnahme des Fahrzeuges (44) zu einem Zeitpunkt zu erstellen, zu dem das Fahrzeug (44) einen vordefinierten Abstand zu dem dritten Bildsensor aufweist.

10. System nach einem der Ansprüche 7 bis 9, **dadurch gekennzeichnet, dass** die Recheneinheit (26) der Messvorrichtung (20) dazu ausgelegt ist,
- die Anzahl der sich bewegenden Merkmale (45) des Fahrzeuges (44) in jedem der Bildaufnahmen zu ermitteln; und
- die Bildaufnahmen sowie die erkannten Merkmale (45) zu verwerfen, sofern die Anzahl A_MM der sich bewegenden Merkmale (45) in einer Bildaufnahme geringer ist als ein vorgegebener Grenzwert A_th.

11. System nach einem der Ansprüche 7 bis 10, **dadurch gekennzeichnet, dass** die Messvorrichtung (20) dazu eingerichtet ist, mindestens eine Bildaufnahme des Fahrzeuges (44) sowie die ermittelte Fahrzeuggeschwindigkeit an die Servereinheit (32) zu übermitteln, wobei die Recheneinheit (26) der Messvorrichtung (20) dazu eingerichtet ist, vor der Übermittlung der Daten an die Servereinheit (32) zumindest die mindestens eine Bildaufnahme zu verschlüsseln.

12. System nach einem der Ansprüche 7 bis 11, **dadurch gekennzeichnet, dass** die Messvorrichtung (20) dazu eingerichtet ist, nach der Übermittlung der Bildaufnahme des Fahrzeuges (44) an die Servereinheit (32) sämtliche Bildaufnahmen aus ihrer Speichereinheit (28) der Messvorrichtung (20) zu löschen.
